# EUROPÄISCHE PATENTSCHRIFT

(11) **EP 0 823 623 B1**
(45) Veröffentlichungstag und Bekanntmachung des Hinweises auf die Patenterteilung: **06.11.2002**
(21) Anmeldenummer: 96112685.1
(22) Anmeldetag: 06.08.1996
(51) Int. Cl.: G01M 17/02

(54) **Verfahren zur Ermittlung von Reifendefekten**
Procedure for detecting tyre defects
Procédé pour détecter les défaults de pneus

(43) Veröffentlichungstag der Anmeldung: 11.02.1998
(73) Patentinhaber: NOVA C.O.R.D. AG, 9494 Schaan (LI)
(72) Erfinder: Rottenkolber, Hans, Dr., 83123 Amerang (DE)
(74) Vertreter: Hano, Christian, Dipl.-Ing.

(56) Entgegenhaltungen:
- DE-A- 4 231 578
- DE-A- 19 501 073

## Beschreibung

Die Erfindung betrifft ein Verfahren zur Ermittlung von Reifendefekten, vorzugsweise bei LKW-Reifen, nach dem Oberbegriff des Patentanspruchs 1.

Aus der DE-OS-42 31 578 A1 ist ein Verfahren bekannt, bei dem die Seitenwand eines Reifens mittels mehrerer Leuchtdioden mit kohärentem Licht bestrahlt und die von dem Reifen zurückgestreute Strahlung in zwei Teilstrahlungen aufgeteilt wird. Die zwei Teilstrahlungen werden derart wieder zusammengeführt, daß die beide Teilstrahlungen zueinander leicht versetzt sind (Shearing). Die die Bildinformation tragenden Teilstrahlungen werden einem elektronischen Bildsensorsystem zugeführt. Dabei wird die Außenseite der Reifenseitenwand durch die abbildende Komponente auf dem Bildsensor abgebildet. Die auf den Bildsensor auftreffende Strahlung wird nach einer A/D-Wandlung in digitale Signale umgewandelt. Vor der Prüfung ist der Reifen zunächst mit einem vorherbestimmten Druck aufgepumpt. In diesem Zustand wird in einer ersten Bildfolge eine Teilstrahlung bezüglich der zweiten Teilstrahlung schrittweise phasenverschoben und diese Bildfolge in dem temporären Speicher eines Rechners abgelegt. Anschließend wird der Reifendruck verringert und in diesem Zustand eine zweite Bildfolge erzeugt. Die einzelnen Schritte der ersten und zweiten Bildfolge werden in einem Rechner zu einem Modulo-2π-Bild verarbeitet. Das aus diesem Verfahren resultierende Bild ist einerseits das Ergebnis der konstruktiven und geometrischen Ausgestaltung des Reifens und andererseits eine Folge von Strukturinhomogenitäten. Das bekannte Verfahren hat allerdings den Nachteil, daß der Effekt von Strukturinhomogenitäten nur dann zu erkennen ist, wenn der Effekt signifikant größer ist als die konstruktiv oder geometrisch bedingten Effekte.

Zur Verbesserung des aus der DE-OS-42 31 578 A1 bekannten Verfahrens wird in der DE 195 01 073 A1 vorgeschlagen, das gemäß dem Verfahren der DE-OS-42 31 578 A1 vorzugsweise durch Tangential-Shearing in Umfangsrichtung des Reifens (genauer gesagt durch ein Shearing in einer zu einer Radialen des Reifens senkrechten Richtung) erhaltene und verstetigte Ausgangs-Grauwertbild in der Weise partiell zu differenzieren, daß ein zweites dem Ausgangs-Grauwertbild gleiches Grauwertbild erzeugt wird, und dieses gegen das Ausgangs-Grauwertbild in Shearing-Richtung geometrisch verschoben wird und das so manipulierte Zweit-Grauwertbild von dem Ausgangs-Grauwertbild subtrahiert wird, damit ein resultierendes Grauwertbild entsteht.

Mit dieser Lösung wurde es bei der Prüfung von PKW-Reifen möglich, daß sich im resultierenden Bild Strukturinhomogenitäten von konstruktiv oder geometrisch bedingten Effekten deutlich abheben und deshalb auf einfache Weise zu identifizieren sind. Außerdem ist es möglich, die jeweilige Strukturinhomogenität einem konkaven oder konvexen Typ zuzuordnen. Das aus der DE 195 01 073.6 A1 bekannte Verfahren ist zur Erkennung von Reifendefekten bei PKW-Reifen oder ähnlichen Reifen sehr gut geeignet. Allerdings können mit diesem Verfahren Reifendefekte bei LKW-Reifen nicht mit ausreichender Sicherheit festgestellt werden. Der Grund hierfür liegt darin, daß bei einem PKW-Reifen und ähnlich aufgebauten Reifen Gürtel und Karkasse als ein einziger Festigkeitsträger angesehen werden können. Dies hat zur Folge, daß sich Festigkeitsabnormitäten unabhängig von deren Lage auf der gesamten Reifenaußenseite und somit auch in der Reifenseitenwand auswirken. LKW-Reifen weisen jedoch in der Regel einen vollkommen anderen Aufbau als PKW-Reifen auf. LKW-Reifen haben ein mehrlagiges Stahlgürtelpaket, das einen eigenständigen Festigkeitsträger darstellt. Die Karkasse stellt mit ihrer Stahlgewebeeinlage einen vom Gürtelpaket weitgehend unabhängigen Festigkeitsträger dar. Es bestehen daher zwischen Gürtelpaket und Karkasse kaum Wechselwirkungen in Bezug auf die Festigkeit. Die höchsten Spannungen entstehen im Schulterbereich in der Übergangszone von Gürtelpaket und Karkasse. Dort kommt es im Falle von extremen Belastungen oder Beschädigungen zum Ablösen des Gürtelpakets. Diese Ablösungen können von außen kaum detektiert werden.

Was eine Gürtelkantenablösung betrifft, ist in der DE 195 01 073.6 A1 erläutert, dass diese typischerweise einen tangentialen Verlauf zeigt und daher eine beste Indikation durch radiales Shearing gegeben ist.

Der Erfindung liegt die Aufgabe zugrunde, ein Verfahren zur Prüfung von Reifen zu schaffen, mit dem sich auch Gürtelkantenablösungen bei LKW-Reifen und anderen Reifen, bei denen Gürtel und Karkasse weitgehend unabhängige Festigkeitsträger sind, zuverlässig erfassen lassen.

Diese Aufgabe wird durch ein Verfahren mit den Merkmalen des Patentanspruchs 1 gelöst.

Vorteilhafte Ausführungsarten des erfindungsgemäßen Verfahrens sind Gegenstand der Patentansprüche 2 bis 8.

Bei der Entwicklung des erfindungsgemäßen Verfahrens hat sich gezeigt, dass ein Tangential-Shearing in Umfangsrichtung des Reifens (genauer gesagt ein Shearing in einer zur einer Radialen des Reifens senkrechten Richtung) ungeeignet ist, da zwischen Gürtelpaket und Karkasse keine Wechselwirkungen bestehen. Fehler verlaufen daher im Schulterbereich in aller Regel in Umfangsrichtung. Die Fehlerausdehnung in Umfangsrichtung beträgt normalerweise ein Mehrfaches des typischen Shearingabstandes. Die Schnittkurve der Grauwertverteilung der Verformung weist in Umfangsrichtung eine kleine, in Radialrichtung jedoch eine große Steigung auf. Bei einem Tangentialshearing wird deswegen am Anfang und am Ende eines Fehlers nur ein schwaches Signal erhalten. Aus diesem Grund wird bei dem erfindungsgemäßen Verfahren ein Radial-Shearing durchgeführt, d.h. es werden Punkte überlagert, die auf einer Radialen und auf zur Radialen parallelen Geraden der Seitenwand nebeneinanderliegen.

Bei einem Radial-Shearing im Schulterbereich eines LKW-Reifens weist die Kurve der Grauwertverteilung bei einer Verformungsänderung aufgrund der Geometrie und der Konstruktion des LKW-Reifens entlang der Radialen bzw. zur Radialen paralleler Geraden auf der Reifenseitenwandfläche stark unterschiedliche Steigungen auf. Fehlerstellen unterscheiden sich von "gesunden" Stellen nicht durch Steigerungsänderungen, sondern durch ein anderes Grauwertniveau. Eine Differenzierung, wie sie in der DE 195 01 073 A1 beschrieben ist, ist daher bei einem Radial-Shearing im Schulterbereich von LKW-Reifen ungeeignet.

Allerdings wird durch ein Radial-Shearing im Schulterbereich allein noch kein Grauwertbild erreicht, das die genaue Identifizierung von Reifendefekten ermöglicht. Einem Ausgangs-Grauwertbild, das gemäß dem aus der DE-OS-42 31 578 A1 bekannten Verfahren durch Radial-Shearing erhalten wird, fehlt die Bezugsgröße. Es können willkürlich hellere oder dunklere Ausgangs-Grauwertbilder als Ergebnis der Verstetigung erhalten werden. Für die Fehlererkennung ist jedoch das Grauwertniveau entscheidend. Aus diesem Grund wird bei dem erfindungsgemäßen Verfahren eine Grauwertnormierung durchgeführt, indem der mittlere Grauwert in dem schmalen, bezüglich der Reifenachse kreisbogenförmig verlaufenden Bereich, der vorzugsweise in einem Bereich mit geringster Verforung (z.B. Gürtelkante) liegt, ermittelt wird, der dann von dem vorherbestimmten Referenzgrauwert subtrahiert wird. Hierdurch findet eine Normierung des Ausgangs-Grauwertbildes statt. Das erhaltene Bewertungs-Grauwertbild ermöglicht die zuverlässige Identifizierung eines Reifendefektes durch den Vergleich mit dem vorherbestimmten Schwellgrauwert.

Bei dem erfindungsgemäßen Verfahren wird das Ausgangs-Grauwertbild mit Hilfe einer Verformung bestimmt, die durch Druckänderung, vorzugsweise durch Druckabsenkung des Reifendrucks erreicht wird. Bei einer solchen Druckabsenkung kann die Gürtelkante eines LKW-Reifens als Einspannstelle angesehen werden. Bei der Druckabsenkung bewegt sich der Seitenwandbereich nach innen, ohne eine merkliche Bewegung der Gürtelkante mit sich zu führen. Die Verformungen entsprechen daher annähernd den Verformungen eines einseitig eingespannten Trägers, auf den eine Kraft an einer von der Einspannstelle entfernten Stelle aufgebracht wird. Das erfindungsgemäße Verfahren ist dann nicht nur zur Erkennung von Reifendefekten im Schulterbereich von LKW-Reifen sondern auch zur Erkennung von Fehlern in allen Bereichen eines Reifens geeignet, in denen Verfonnungsverhältnisse vorliegen, die denen eines einseitig eingespannten Trägers ähnlich sind. Die Verformung kann auch durch Druckerhöhung erreicht werden.

Die Erfindung wird nachstehend anhand von Zeichnungen näher erläutert. Es zeigt:
- Fig. 1: im Querschnitt schematisch den Schulterbereich eines LKW-Reifens;
- Fig. 2: eine teilweise Seitenansicht des Reifens von Fig. 1, die einen Prüfabschnitt mit einem Normierungsstreifen zeigt
- Fig. 3: ein Bewertungs-Grauwertbild eines Segments eines geprüften Schulterbereichs ohne Defekt;
- Fig. 4: die Grauwertverteilung des Bewertungs-Grauwertbildes von Fig. 3 entlang zweier zur Radialen des Reifens paralleler Geraden;
- Fig. 5: ein Bewertungs-Grauwertbild eines Segments eines geprüften Schulterbereichs mit einem Defekt;
- Fig. 6: die Grauwertverteilung des Bewertungs-Grauwertbildes von Fig. 5 entlang zweier zur Radialen des Reifens paralleler Geraden;
- Fig. 7: eine dreidimensionale Darstellung der Grauwertverteilung des Bewertungs-Grauwertbildes von Fig. 3 und
- Fig. 8: eine dreidimensionale Darstellung der Grauwertverteilung des Bewertungs-Grauwertbildes von Fig. 5.

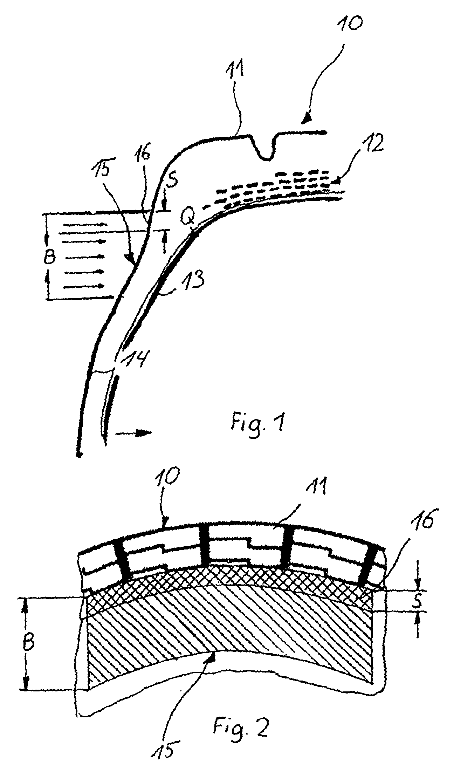

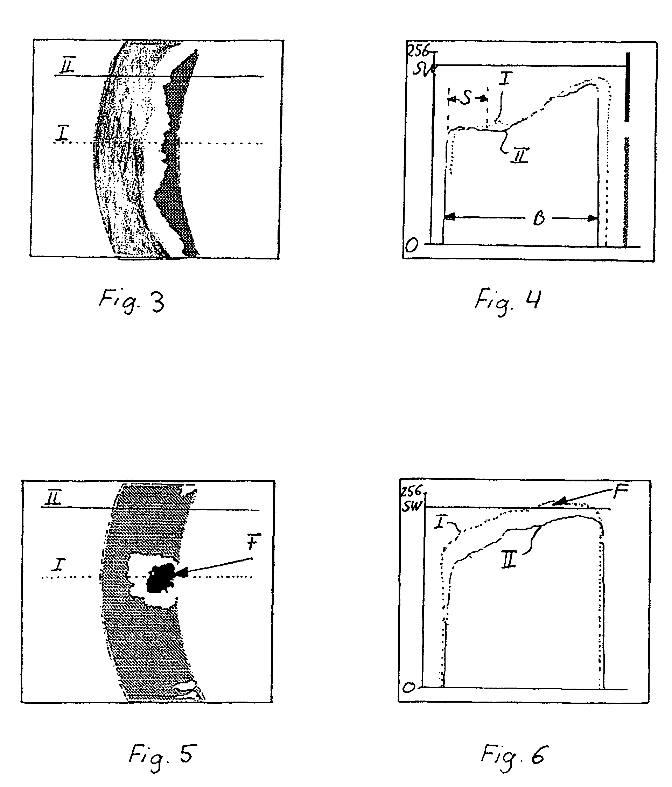

Fig. 1 zeigt schematisch den Querschnitt eines zu prüfenden LKW-Reifens 10 mit einer Stahlgewebe enthaltenden Karkasse 13, einer Lauffläche 11 sowie einem zwischen der Karkasse 13 und der Lauffläche 11 angeordneten Gürtelpaket 12. In Fig. 2 ist ein bezüglich der Reifenachse kreisbogenförmiger Prüfabschnitt 15 der Seitenwand 14 des LKW-Reifens 10 gezeigt, dessen oberer Rand sich im Bereich des Übergangs zwischen Karkasse 13 und Gürtelpaket 12 befindet.

Zur Überprüfung des Prüfbereichs 15 auf einen Fehler wird der Prüfbereich 15 zunächst mittels des aus der DE-OS-42 31 578 A1 bekannten Verfahrens geprüft, bei dem mehrere Laserdioden zur Beleuchtung verwendet werden und das Shearing in radialer Richtung des LKW-Reifens, d.h. in Fig. 2 von oben nach unten erfolgt. Die Verformung erfolgt dadurch, daß der Reifendruck vermindert wird, wodurch die Seitenwand 14 des Reifens um eine Linie Q im Übergangsberich zwischen Karkasse 13 und Gürtelpaket 12 nach innen bewegt wird. Die Verformung entspricht deswegen annähernd der Verformung eines einseitig eingespannten Trägers.

Es wird ein Modulo-2π-Bild gewonnen, das so in ein Ausgangs-Grauwertbild umgesetzt wird, daß die Grauwerte der einzelnen Bildpunkte die Differenz der Verformung zweier Punkte auf dem Prüfobjekt angeben, die auf einer Radialen bzw. auf zur Radialen parallel Geraden benachbart sind. Hierfür geeignete Entfaltungsmethoden sind zum Beispiel beschrieben in "Digitale Verarbeitung und Auswertung von Interferenzbildern", Wolfgang Osten, Akademieverlag Berlin, 1991, S. 138 bis 144 und in "Proceedings of the First International Workshop on Automatic Processing of Fringe Patterns", Akademieverlag Berlin, 1989, S. 23 bis 31.

Anschließend wird von einem schmalen kreisbogenförmiger Streifen des Ausgangs-Grauwertbildes, der einem schmalen kreisbogenförmigen Streifen 16 am Außenrand des Prüfbereichs 15 der Seitenwand 14 mit einer Breite S von beispielsweise 5 mm entspricht, in dem Rechner ein mittlerer Grauwert durch bekannte Methoden der Mittelwertbildung ermittelt. Dabei wird jedem Bildpunkt in dem Streifen des Ausgangs-Grauwertbildes ein bestimmter Grauwert aus einem Grauwertbereich von 0 (schwarz) und 255 (weiß) zugeordnet. Anschließend werden die Grauwerte aller Bildpunkte in dem schmalen Streifen addiert und die Summe durch die Anzahl der Bildpunkte geteilt.

Daraufhin wird in dem Rechner der so ermittelte mittlere Grauwert von einem vorher bestimmten Referenz-Grauwert, z.B. dem Grauwert 128 subtrahiert. Nun wird in dem Rechner der dem Ergebnis der Subtraktion entsprechende Grauwert, der auch negativ sein kann, zu den Grauwerten der einzelnen Bildpunkte des Ausgangs-Grauwertbildes addiert, wodurch ein Bewertungs-Grauwertbild erhalten wird.

Entsprechende Bewertungs-Grauwertbilder sind schematisch in Fig. 3 und 5 gezeigt. Zur Vereinfachung sind in diesen Figuren jeweils nur drei unterschiedliche Grauwertbereiche gezeigt, wobei der am dunkelsten gezeigte Bereich der hellste und der grau gezeigte Bereich der dunkelste Bereich des jeweiligen Bewertungs-Grauwertbildes ist. In den tatsächlichen Bewertungs-Grauwertbildern gehen die Grauwerte ineinander über.

Fig. 3 zeigt das Bewertungs-Grauwertbild eines LKW-Reifens, der in dem Prüfbereich keinen Defekt aufweist. In Fig. 4 sind die Grauwertverteilungen des Bewertungs-Grauwertbildes von Fig. 3 entlang zweier parallel zur Radialen verlaufender Geraden I und II gezeigt. Es ist deutlich zu erkennen, daß sich die beiden Grauwertverteilungen auf annähernd dem gleichen Niveau befinden, wobei beide Grauwertverteilungen unterhalb eines Schwellgrauwertes SW liegen, anhand dessen ein Reifendefekt bestimmt wird.

Fig. 5 zeigt das Bewertungs-Grauwertbild eines LKW-Reifens mit einem Reifendefekt F auf der Geraden I, der beispielsweise durch eine Ablösung im Bereich der Gürtelkante hervorgerufen wurde. In Fig. 6 ist deutlich zu erkennen, daß das Grauwertniveau der Grauwertverteilung entlang der Geraden I deutlich oberhalb des Grauwertniveaus der Grauwertverteilung entlang der Geraden II befindet, entlang derer kein Reifendefekt vorhanden ist.

Die Grauwertverteilung I überschreitet im rechten Bereich von Fig. 6, d.h dem Bereich des Reifendefekts den Schwellgrauwert SW, wodurch ein Fehler angezeigt wird.

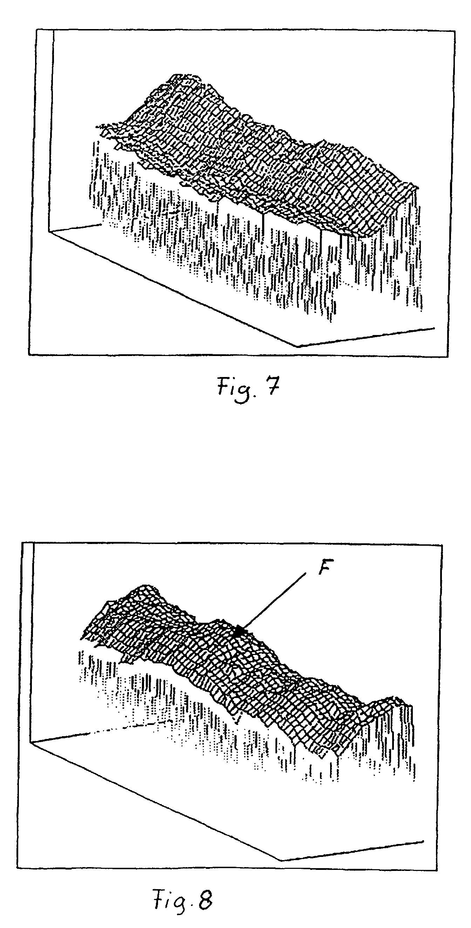

Fig. 7 und 8 zeigen eine dreidimensionale Darstellung der Grauwertverteilungen der Bewertungs-Grauwertbilder von Fig. 3. Es ist deutlich zu erkennen, daß die Grauwertverteilung von Fig. 8 im Bereich des Reifendefekts F eine hügelähnliche Erhöhung aufweist, die den Reifendefekt F andeutet.

Ein geeigneter Schwellgrauwert, dessen Überschreiten auf einen Reifendefekt hinweist, ist beispielsweise 180. Der Schwellwert ist jedoch abhängig von den Prüfparametern, wie z.B. dem Shearing-Abstand, der Luftabsenkung oder dem Reifentyp.

Wenn das Bewertungs-Grauwertbild bei Erkennung eines Reifendefekts den Schwellgrauwert überschreitet, kann beispielsweise durch den Rechner ein Signal abgegeben werden, das ein Hupsignal einer Hupvorrichtung oder ein optisches Signal einer optischen Anzeige auslöst, wodurch eine Bedienungsperson, die das erfindungsgemäße Verfahren durchführt, auf einfache Weise auf einen Reifendefekt hingewiesen werden kann. Nach Auslösung des Signals kann der ganze Vorgang abgebrochen werden, da der geprüfte LKW-Reifen für eine weitere Verarbeitung ungeeignet ist.

Falls in dem geprüften Prüfbereich kein Reifendefekt ermittelt wird, wird der Reifen so gedreht, daß ein weiterer, an den geprüften Prüfabschnitt angrenzender Prüfabschnitt mittels des erfindungsgemäßen Verfahrens geprüft werden kann.

## Patentansprüche

1. Verfahren zur Ermittlung von Reifendefekten, vorzugsweise bei LKW-Reifen und anderen Reifen, bei denen Gürtel und Karkasse weitgehend unabhängige Festigkeitsträger sind, bei dem
- ein Prüfbereich des Reifens mit mehreren kohärenten Lichtquellen beleuchtet wird,
- die vom Reifen zurückgestreute Strahlung in einem Zweistrahl-Interferometer in zwei Teilstrahlungen aufgeteilt wird,
- in dem Zweistrahl-Interferometer die eine der beiden Teilstrahlungen gegen die andere Teilstrahlung in einer Richtung verkippt wird, die einer bezüglich des Reifens radialen Versetzung entspricht,
- in dem Zweistrahl-Interferometer eine der beiden Teilstrahlungen schrittweise phasenverschoben wird,
- die von dem Reifen zurückgestreute und in dem Zweistrahl-Interferometer in die zwei Teilstrahlungen aufgeteilte und wieder zusammengeführte Strahlung durch die Oberfläche des Reifens abbildende Komponenten einem elektronischen Bildsensorsystem zugeführt wird,
- die von dem Bildsensorsystem abgegebenen Signale digitalisiert und in einem Bildverarbeitungssystem zu Modulo-2π-Bildern weiterverarbeitet werden und die Modulo-2π-Bilder zu einem Ausgangs-Grauwertbild verstetigt werden, das mit Hilfe einer Verformung bestimmt wird, die durch eine Veränderung des Reifendrucks erreicht wird, wobei die Grauwerte der einzelnen Bildpunkte die Differenz der Verformung zweier Punkte auf dem Reifen angeben,
**dadurch gekennzeichnet, daß**
- von einem Segment des Ausgangs-Grauwertbildes, das einem schmalen, bezüglich der Reifenachse im wesentlichen kreisbogenförmig verlaufenden Bereich der Oberfläche des Reifens entspricht, der mittlere Grauwert ermittelt wird,
- der mittlere Grauwert von einem vorher bestimmten Referenzgrauwert subtrahiert wird,
- der dem Ergebnis der Subtraktion entsprechende Grauwert zu dem Ausgangs-Grauwertbild addiert wird, um ein Bewertungsgrauwertbild zu erhalten, und
- die Grauwerte des Bewertungs-Grauwertbildes mit einem vorherbestimmten Schwellgrauwert verglichen werden,
- wobei ein Reifendefekt festgestellt wird, wenn ein Grauwert des Bewertungs-Grauwertbildes den vorherbestimmten Schwellgrauwert überschreitet.

2. Verfahren nach Anspruch 1, **dadurch gekennzeichnet, daß** bei einem Grauwertbereich von 0 bis 255 der Referenzwert im mittleren Grauwertbereich, vorzugsweise bei 128, liegt.

3. Verfahren nach Anspruch 1 oder 2 **dadurch gekennzeichnet, daß** der Reifen abschnittsweise auf Reifendefekte untersucht wird.

4. Verfahren nach Anspruch 3, **dadurch gekennzeichnet, daß** die einzelnen untersuchten Abschnitte als Sequenz in einem einzigen Bild für den gesamten Reifen dargestellt werden.

5. Verfahren nach Anspruch 3, **dadurch gekennzeichnet, daß** bei Überschreiten eines Schwellwertes der Prüfvorgang abgebrochen wird.

6. Verfahren nach einem der vorhergehenden Ansprüche, **dadurch gekennzeichnet, daß** bei Überschreiten eines Schwellwertes ein Fehlersignal abgegeben wird.

7. Verfahren nach Anspruch 6, **dadurch gekennzeichnet, daß** das Fehlersignal ein optisches oder akustisches Signal ist.

8. Verfahren nach einem der vorhergehenden Ansprüche, **dadurch gekennzeichnet, daß** der LKW-Reifen im Bereich der Gürtelkante untersucht wird.

## Claims

1. Method for detecting tyre defects, preferably in truck tyres and other tyres in which the belt and carcass are substantially independent strengthening structures, whereby
- a testing area of the tyre is illuminated with a plurality of coherent light sources,
- the radiation scattered back from the tyre is divided into two partial beams in a two-beam interferometer,
- in the two-beam interferometer, one of the two partial beams is tilted relative to the other partial beam in a direction that corresponds to a radial displacement relative to the tyre,
- in the two-beam interferometer one of the two partial beams is phase-shifted in stepwise manner,
- the radiation scattered back from the tyre and split into the two partial beams and subsequently recombined in the two-beam interferometer is supplied to an electronic image sensor system by components imaging the surface of the tyre
- the signals output by the image sensor system are digitised and further processed in an image processing system into modulo 2π images and the modulo 2π images are fixed as an output grey-value image determined with the aid of a deformation achieved through a change in tyre pressure whereby the grey values of the individual image points show the difference in deformation of two points on the tyre, **characterised in that**
- from a segment of the output grey-value image corresponding to a narrow and, relative to the tyre axis, substantially circular arc-shaped region of the surface of the tyre, the mean grey value is determined,
- the mean grey value is subtracted from a previously determined reference grey value,
- the grey value corresponding to the result of the subtraction is added to the output grey-value image in order to obtain an evaluation grey-value image, and
- the grey values of the evaluation grey-value image are compared with a previously determined threshold grey value,
- whereby a tyre defect is ascertained if a grey value of the evaluation grey value image exceeds the previously determined threshold grey value.

2. Method according to Claim 1, **characterised in that** with a grey value range of 0 to 255, the reference value lies in the middle grey value range, preferably 128.

3. Method according to Claim 1 or 2, **characterised in that** the tyre is investigated section by section for tyre defects.

4. Method according to Claim 3, **characterised in that** the individual investigated sections are represented as a sequence in a single image for the whole tyre.

5. Method according to Claim 3, **characterised in that** when a threshold value is exceeded the testing procedure is terminated.

6. Method according to one of the previous claims, **characterised in that** when a threshold value is exceeded a fault signal is issued.

7. Method according to Claim 6, **characterised in that** the fault signal is an optical or acoustic signal.

8. Method according to one of the previous claims, **characterised in that** the truck tyre is investigated in the region of the belt edge.

## Revendications

1. Procédé de détection de défauts de pneus, de préférence dans les pneus de camions et d'autres pneus, dans lesquels des ceintures et une carcasse sont des supports de stabilité en grande partie indépendants, dans lequel
- une zone d'essai du pneu est éclairée avec plusieurs sources de lumière cohérentes,
- le rayonnement renvoyé par le pneu est divisé dans un interféromètre à deux rayons en deux rayonnements partiels,
- dans l'interféromètre à deux rayons, l'un des deux rayonnements partiels est culbuté contre l'autre rayonnement partiel dans un sens qui correspond à un décalage radial par rapport au pneu,
- dans l'interféromètre à deux rayons, l'un des deux rayonnements partiels est déplacé en phase graduellement,
- le rayonnement renvoyé par le pneu et divisé dans l'interféromètre à deux rayons en deux rayonnements partiels et à nouveau réuni est amené par les composantes représentant la surface du pneu à un système de détection d'image électronique,
- les signaux fournis par le système de détection d'image sont numérisés et traités ultérieurement dans un système de traitement d'image en images modulo-2p et les images modulo-2π sont rendues stables en une image 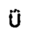 valeur de gris de départ, qui est déterminée à l'aide d'une déformation qui est obtenue par une modification de la pression du pneu, la valeur de gris des différents points d'image indiquant la différence de la déformation de deux points sur le pneu,
**caractérisé en ce que**
- d'un segment de l'image de valeur de gris de départ, qui correspond à une zone étroite, passant essentiellement en forme d'arc de cercle par rapport à l'axe du pneu, la valeur de gris moyenne est détectée,
- la valeur de gris moyenne est soustraite d'une valeur de gris de référence déterminée auparavant,
- la valeur de gris correspondant au résultat de la soustraction est ajoutée à l'image de valeur de gris de départ, pour obtenir une image de valeur de gris d'estimation, et
- les valeurs de gris de l'image de valeur de gris d'évaluation sont comparées à une valeur de gris de seuil déterminée à l'avance,
- dans lequel un défaut de pneu est constaté lorsqu'une valeur de gris de l'image de valeur de gris d'évaluation dépasse la valeur de gris de seuil déterminée à l'avance.

2. Procédé selon la revendication 1, **caractérisé en ce que** dans une zone de valeur de gris de 0 à 255, la valeur de référence dans la zone de valeur de gris moyenne se situe, de préférence, à 128.

3. Procédé selon la revendication 1 ou 2, **caractérisé en ce que** le pneu est examiné, par sections en recherchant les défauts du pneu.

4. Procédé selon la revendication 3, **caractérisé en ce que** les différentes sections examinées sont représentées comme séquence dans une seule image pour l'ensemble du pneu.

5. Procédé selon la revendication 3, **caractérisé en ce que** lors du dépassement d'une valeur de seuil, le processus de contrôle est interrompu.

6. Procédé selon l'une des revendications précédentes, **caractérisé en ce que** lors du dépassement d'une valeur de seuil un signal d'erreur est fourni.

7. Procédé selon la revendication 6, **caractérisé en ce que** le signal d'erreur est un signal optique ou acoustique.

8. Procédé selon l'une des revendications précédentes, **caractérisé en ce que** le pneu de camion est examiné dans la zone de la bordure de la ceinture.
